Europäisches Patentamt

European Patent Office

Office européen des brevets

(19)

(11) Numéro de publication: **0 075 278 B1**

# FASCICULE DE BREVET EUROPEEN

(45) Date de publication du fascicule du brevet: **24.09.86**

(51) Int. Cl.⁴: **G 06 F 11/16**

(21) Numéro de dépôt: **82108541.2**

(22) Date de dépôt: **16.09.82**

(54) **Procédé de synchronisation de deux microprocesseurs.**

(30) Priorité: **22.09.81 FR 8117832**

(43) Date de publication de la demande:
**30.03.83 Bulletin 83/13**

(45) Mention de la délivrance du brevet:
**24.09.86 Bulletin 86/39**

(84) Etats contractants désignés:
**AT BE CH DE FR GB IT LI LU NL SE**

(56) Documents cités:
**DE-A-2 458 224**
**DE-B-1 269 827**
**DE-B-2 651 314**
**US-A-3 810 119**

(73) Titulaire: **CGEE ALSTHOM Société anonyme dite:**
**13, rue Antonin Raynaud**
**F-92309 Levallois-Perret (FR)**

(72) Inventeur: **Boissard, Daniel**
**30, avenue de la République**
**F-92120 Montrouge (FR)**

(74) Mandataire: **Weinmiller, Jürgen et al**
**Zeppelinstrasse 63**
**D-8000 München 80 (DE)**

Courier Press, Leamington Spa, England.

**Description**

Les microprocesseurs sont de plus en plus souvent utilisés dans des automatismes assurant la conduite d'installations industrielles. Certaines d'entre elles, sur lesquelles l'émission d'un ordre intempestif peut avoir de graves conséquences doivent être protégées contre un défaut éventuel de leur automatisme de commande. Une manière d'assurer cette protection consiste à employer pour la conduite d'une même installation deux microprocesseurs identiques qui fonctionnent en parallèle à partir des mêmes données disponibles sur des entrées communes et à l'aide de programmes distincts mais identiques, et qui sont couplés en sortie sur un comparateur de sécurité en logique câblée ne validant une information qu'en cas d'unanimité des microprocesseurs. Le moyen le plus simple pour obtenir un fonctionnement parallèle des microprocesseurs est de les faire fonctionner à partir d'une horloge commune et de synchroniser leurs cycles machine. (DE—B—2 651 314.)

Cette synchronisation n'est ni naturellement établie ni naturellement stable car les phénomènes de départ et de parasites n'ont aucune cohérence avec l'état des microprocesseurs. En outre les microprocesseurs bien qu'identiques n'ont pas rigoureusement les mêmes seuils logiques et recoivent des signaux d'horloge légèrement déphasés du fait des trajets différents suivis par ces derniers depuis l'horloge. Il en résulte qu'une même information n'est jamais échantillonnée aux mêmes instants ni comparée aux mêmes seuils par les deux microprocesseurs et peut de ce fait, surtout si elle présente des transitions asynchrones par rapport à l'horloge, être vue au cours du même microcycle à une certaine valeur par l'un des microprocesseurs et à une autre valeur par l'autre microprocesseur et entrainer une désynchronisation du fonctionnement de ces derniers.

La présente invention a pour but d'établir une synchronisation au cycle machine près entre deux microprocesseurs et de la rétablir lorsqu'elle disparait, cela, notamment, en vue de permettre à deux microprocesseurs identiques d'exécuter une même tâche de manière indépendante mais en synchronisme total.

Elle a pour objet un procédé de synchronisation de deux microprocesseurs ayant chacun son programme et fonctionnant à partir des microcycles d'une horloge commune. Ce procédé consiste:

— à munir chaque microprocesseur d'un registre dit de synchronisation qu'il peut armer par l'inscription d'une première valeur et désarmer par l'inscription d'une deuxième valeur et qui peut être lu par l'autre microprocesseur,

— à commander les microprocesseurs pour qu'ils entament simultanément une procédure de synchronisation au cours de laquelle l'un d'entre suf die premier microprocesseur

. effectue deux lectures successives du registre de synchronisation de l'autre microprocesseur dit deuxième microprocesseur, ces deux lectures étant espacées d'un nombre entier $N_1$ et microcycles comptés au moyen de ses cycles machine.

. arme son registre de synchronisation au bout d'un nombre entier $N_2$ de microcycles comptés au moyen de ses cycles machine à partir de sa première lecture du registre de synchronisation du deuxième microprocesseur,

. désarme son registre de synchronisation au bout d'un nombre entier $N_3 + 1$ de microcycles comptés au moyen de ses cycles machine depuis l'armement effectif de son registre de synchronisation,

. répète l'ensemble des trois opérations précédentes au bout d'un nombre entier $N_4$ de microcycles comptés au moyen de ses cycles machine depuis l'armement effectif de son registre de synchronisation, tant que le registre de synchronisation du deuxième microprocesseur ne réflète pas un état de synchronisation en lui apparaissant constamment armé au cours des deux lectures successives qu'il en effectue

. et, un fois que le registre de synchronisation du deuxième microprocesseur lui apparaît constamment armé, ce qui lui permet de repérer sa position dans la procédure de synchronisation par rapport à celle du deuxième microprocesseur, attend un nombre entier $N_5$ de microcycles comptés au moyen de ses cycles machine depuis le désarmement de son registre de synchronisation, pour retrouver le synchronisme et reprendre son programme

tandis qu'au cours de cette même procédure de synchronisation l'autre microprocesseur dit deuxième microprocesseur

. arme son registre de synchronisation

. désarme son registre de synchronisation au bout du nombre entier $N_1 + 1$ de microcycles comptés au moyen de ses cycles machine depuis l'armement de son registre de synchronisation,

. effectue deux lectures successives du registre de synchronisation du premier microprocesseur au bout du nombre entier $N_2$ de microcycles comptés au moyen de ses cycles machine depuis l'armement effectif de son registre de synchronisation, ces deux lectures étant espacées du nombre entier $N_3$ de microcycles comptés au moyen de ces cycles machine

. répète l'ensemble de ces trois opérations au bout d'un nombre $N_6$ de microcycles différent du nombre $N_4$, la valeur absolue de la difference $N_6 - N_4$ étant un nombre premier par rapport à $N_2 + N_4$, les microcycles étant comptés au moyen de ses cycles machine à partir de sa première lecture, tant que le registre de synchronisation du premier microprocesseur ne réflète par un état de synchronisation en lui apparaissant constament armé au cours de ses deux lectures successives

. et une fois que le registre de synchronisation du premier microprocesseur lui est apparu constament armé, ce qui permet de repérer sa position dans la procédure de synchronisation par rapport à celle du premier microprocesseur attend un nombre entier $N_5 + 1$ de microcycles comptés au moyen de ses cycles machine depuis sa deuxième lecture pour retrouver le synchronisme et reprendre son programme.

Le nombre $N_6$ de microcycles au bout duquel le deuxième microprocesseur répète l'armement et le désarmement de son registre de synchronisation ainsi que les deux lectures successives du registre de synchronisation du premier microprocesseur diffère avantageusement d'un microcycle du nombre $N_4$ de microcycles au bout duquel le premier microprocesseur répète des opérations analogues. Il est choisi de manière préférentielle égal:

— au nombre $N_4$ diminué d'une unité si le deuxième microprocesseur a vu le registre de synchronisation du premier microprocesseur armé au cours de sa première lecture et désarmé au cours de sa deuxième lecture,

— au nombre $N_4$ augmenté d'une unité si le deuxième microprocesseur a vu le registre de synchronisation du premier microprocesseur désarmé au cours de sa première lecture et armé au cours de sa deuxième lecture.

— et à la somme du nombre $N_4$ et du nombre $N_1$ augmentée d'une unité si le deuxième microprocesseur a vu le registre de synchronisation du premier microprocesseur désarmé au cours des deux lextures successives qu'il en effectue.

Ce procédé de synchronisation peut comporter en outre un test de synchronisation consistant à commander à chaque microprocesseur, après qu'il ait vu le registre de synchronisation de l'autre constamment armé et avant qu'il exécute son programme, une troisième lecture du registre de synchronisation de l'autre microprocesseur au cours de laquelle ce registre doit apparaître désarmé, un résultat inverse conduisant à une reprise du procédé de synchronisation depuis l'origine.

Lorsqu'il est utilisé avec des microprocesseurs identiques qui doivent effectuer en parallèle une même tâche à partir de données identiques disponibles sur des entrées communes et à l'aide de programmes distincts mais identiques et qui sont munis de registres de vérification dans lesquelles il font transiter leurs informations de sortie pour ne les valider à l'aide d'une logique de comparaison câblée qu'en cas d'identité, il est avantageux de compléter le procédé de synchronisation précité en commandant parallèlement à chacun des microprocesseurs, au cours de l'exécution de leur programme, de transférer toutes les données en provenance de l'extérieur dans les registres de vérification avant leur utilisation et de recommencer cette opération tant que la logique câblée de comparaison détecte une différence entre les données contenues dans les registres de vérification.

D'autres caractéristiques et avantages de l'invention ressortiront des revendications jointes et de la description ci-après d'un exemple d'application. Cette description sera faite en regard du dessin dans lequel:

— la figure 1 représente schématiquement au automatisme à microprocesseur dédoublé utilisant le procédé de synchronisation selon l'invention,

— la figure 2 est un diagramme de temps illustrant un cas de divergence des deux microprocesseurs

— et les figures 3, 4 et 5 sont des diagrammes illustrant la chronologie des opérations effectuées par les microprocesseurs en cours de synchronisation.

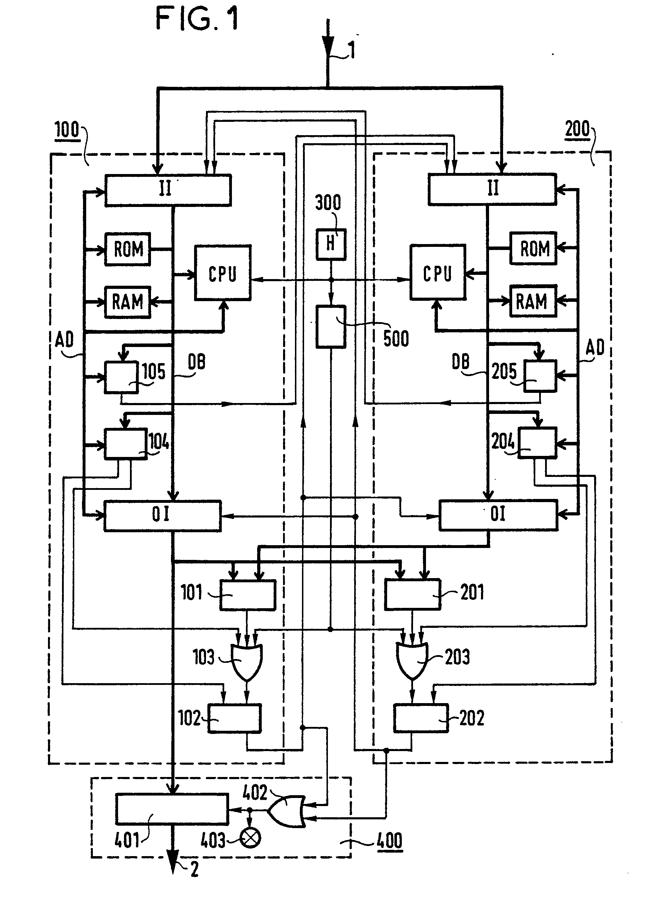

La figure 1 représente, de manière schématique un automatisme d'action autotesté destiné à la commande d'une installation industrielle. Deux microprocesseurs 100 et 200 identiques recoivent en parallèle les signaux d'une horloge commune 300 et des informations 1 relatives à la marche de l'installation industrielle et délivre des commandes en direction d'une logique de sécurité 400 qui ne valide une modification des commandes de l'installation qu'en cas d'unanimité des deux microprocesseurs 100, 200.

Chaque microprocesseur 100, 200 comporte, du manière bien connue, un interface d'entrée II par lequel il a accès aux informations relatives à la marche de l'installation industrielle et de l'autre microprocesseur, un interface de sortie OI par lequel il délivre des commandes, une mémoire morte de programme ROM, une mémoire vive de calcul RAM et une unité central CPU interconnectés par un bus de données DB et un bus d'adresses AD.

En plus de ces éléments, chaque microprocesseur 100, 200 est muni d'une logique câblée lui permettant de détecter à tout instant une différence entre les commandes qu'il délivre et celles de l'autre microprocesseur, et d'inhiber les commandes de l'autre microprocesseur. Cette logique comprend:

— un comparateur câblé 101, 201 avec deux entrées de comparaison connectées aux sorties des interfaces de sortie OI des deux microprocesseurs 100, 200 et une sortie qui passe au niveau logique 1 en cas de différence entre les commandes délivrées par les deux microprocesseurs 100, 200.

— une mémoire de défaut 102, 202 constituée d'une bascule bistable dont la commande de remise à un est connecté par l'intermédiaire d'une porte logique de type "ou" 103, 203 à trois entrées, à la sortie du comparateur câblé 101, 201, à celle d'un circuit de surveillance d'horloge 500 et à un interface de positionnement 104, 204 du microprocesseur lui-même 100 respectivement 200, dont la commande de remise à zéro est connectée audit interface de positionnement 104, 204 et dont la sortie est connectée d'une part à la commande de remise à zéro de l'interface de sortie OI de l'autre microprocesseur 200 respectivement 100 de manière à annuler les commandes de ce dernier lorsque la mémoire de défaut est armée au niveau logique 1 et d'autre part à l'interface d'entrée II de l'autre microprocesseur 200 respectivement 100 de manière à lui signifier une remise à zéro éventuelle de son interface de sortie OI,

— ladite porte logique de type "ou" à trois entrées 103, 203,

— ladite interface de positionnement 104, 204 qui permet d'armer ou de désarmer la mémoire de défaut 102, 202 par programmation de l'unité centrale CPU du microprocesseur 100, 200,

— et un registre de synchronisation 105, 205 connecté en sortie à l'interface d'entrée II de l'autre microprocesseur 200 respectivement 100 et constitué d'un registre qui peut être adressé et inscrit par le microprocesseur 100 respectivement 200 et lu par l'autre 200 respectivement 100.

La logique de sécurité 400 est formée d'un ensemble de registres de transfert 401 recevant en entrée les commandes fournies part l'interface de sortie OI du microprocesseur 100, délivrant en sortie les commandes 2 néssaires à la marche de l'installation industrielle et ayant une commande de transfert connectée par l'intermédiaire d'une porte logique de type "ou" 402 à deux entrées connectées aux sorties des mémoires de défaut 102, 202 des microprocesseurs 100, 200 et bloquée par l'armement de l'une quelconque des rémoires de défaut 102, 202. La parte logique de type "ou" 402 commande également une alarme 403.

Les microprocesseurs 100, 200, sont programmés de manière identique en ce qui concerne la conduite de l'installation industrielle, conduite que chacun d'entre eux pourrait assurer seul si ce n'était l'exigence de sécurité. La sécurité de l'automatisme repose sur le fait que deux microprocesseurs identiques programmés de façon identique doivent avoir des réponses identiques à des sollicitations identiques. Toute différence de comportement entre les deux microprocesseurs est, dans cette optique de sécurité, caractéristique d'un état de défaut de l'automatisme et doit aboutir au gel des commandes dans leurs états antérieurs à l'apparition du défaut. Elle est détectée au niveau des interfaces de sorties OI des microprocesseurs 100, 200 par les comparateurs câblés 101, 201. Dès que le comparateur câblé d'un premier microprocesseur détecte une différence entre les commandes du premier et du deuxième microprocesseurs il bloque la logique de sécurité 400 qui maintient les commandes dans leurs états antérieurs, remet à zéro l'interface de sortie OI du deuxième microprocesseur et entraîne, par réaction, la mise à zéro de l'interface de sortie OI du premier microprocesseur ce qui parfait le blocage de l'automatisme.

Pour obtenir un fonctionnement correct de l'automatisme en l'absence d'une panne de l'un des microprocesseurs 100, 200, il est nécessaire que les instructions de modification de contexte des deux microprocesseurs 100, 200 se déroulent au même instant ce qui implique une exécution parfaitement synchrone de leur programmes.

Les instructions s'exécuteront simultanément si, d'une part les programmes des deux microprocesseurs sont compatibles en temps d'exécution et si, d'autre part les microprocesseurs démarrent au même instant et interprètent de la même manière les données à traiter.

La compatibilité des programmes en temps d'exécution est facile à obtenir en utilisant une horloge 300 commune aux deux microprocesseurs et en donnant à ces derniers des programmes identiques pour la conduite de l'installation industrielle. Le manque de sûreté du à la non-redondance de l'horloge 300 est compensé par la présence d'un circuit de surveillance d'horloge 500 qui peut être une bascule monostable constamment armée dont le déclenchement bloque la logique de sécurité 400 par l'intermédiaire des mémoires de défaut 101, 201 et qui est constamment remise à zéro avant son basculement par le signal d'horloge.

Le démarrage des microprocesseurs au même microcycle d'horloge et leur interprétation identique des données à traiter ne peuvent par contre pas être assurés dans toutes les éventualités, cela pour diverses raisons, notamment les parasites qui peuvent affecter différemment les deux microprocesseurs 100, 200, les écarts entre les seuils par rapport auxquels les microprocesseurs comparent une même donnée pour en déterminer le niveau logique et les écarts entre les instants d'échantillonnage d'une même donnée au cours d'un même microcycle d'horloge dus dux différences entre les trajets suivis par le signal d'horloge pour parvenir aux unités centrales CPU des deux microprocesseurs.

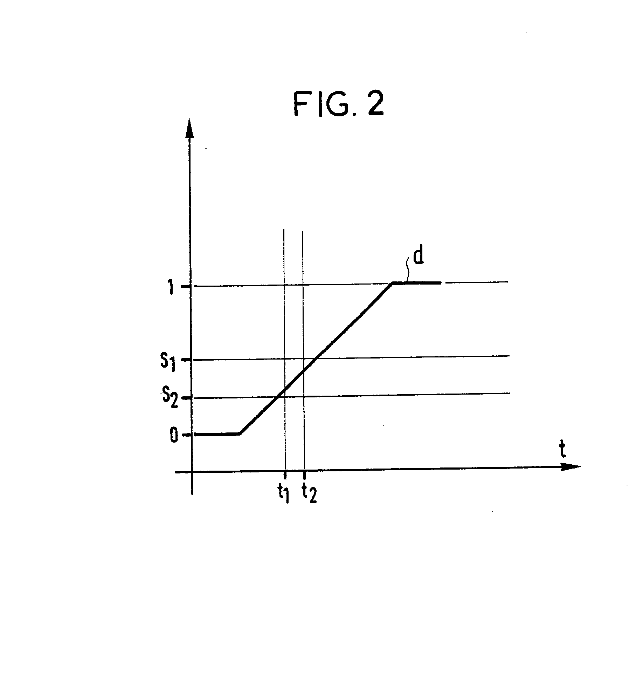

La figure 2 illustre l'une des nombreuses éventualités où une même donnée peut être vue différemment par deux microprocesseurs cadencés par une horloge commune. Une donnée d · asynchrone par rapport à l'horloge passe de la valeur logique 0 à la valeur logique 1 alors qu'elle est en cours de lecture par les deux microprocesseurs. Le premier microprocesseur qui l'échantillonne à un instant $t_1$ par rapport à son seuil $S_1$ lit une valeur logique 0 tandis que le deuxième microprocesseur qui l'échantillonne à un instant $t_2$ par rapport à son seuil $S_2$ lit une valeur logique 1. Avec des microprocesseurs identiques cadencés par une horloge commune les seuils $S_1$ et $S_2$ sont naturellement très proches de même que les temps $t_1$ et $t_2$ de sorte qu'une telle éventualité n'a que peu de chance de se produire. Il faut néanmoins s'en prémunir pour ne pas aboutir à des blocages injustifiés de l'automatisme.

Il est donc nécessaire de pouvoir récupérer le synchronisme de marche des deux microprocesseurs 100, 200 soit à la mise en route, soit lorsqu'une mémoire de défaut 102, 202 est armée de façon non attendue. Cela s'obtient en amenant les deux microprocesseurs 100, 200 à effectuer des tâches déterminées au cours des mêmes cycles d'horloge et plus précisémment en amenant chaque microprocesseur 100, 200 à armer sont registre de synchronisation le microcycle d'horloge précédent celui où ce registre est lu une première fois par l'autre microprocesseur et à la désarmer le microcycle suivant celui où il est lu une deuxième fois par l'autre microprocesseur et ensuite, au bout d'un certain nombre de microcycles, en relançant dans chaque microprocesseur le programme de conduite de l'installation industrielle depuis son origine.

Pour ce faire, on entame une procédure de synchronisation des deux microprocesseurs au cours de laquelle on commande périodiquement à chaque microprocesseur d'armer son registre de synchronisation pendant un certain nombre de cycles machine puis d'effectuer deux lectures successives du registre de synchronisation de l'autre microprocesseur espacées d'un nombre convenable de cycle machine, l'un des microprocesseurs opérant avec un programme bouclé de longueur fixe, l'autre avec un autre programme bouclé de longueur différente éventuellement variable et plus ou moins long que le programme de longueur fixe selon que le résultat de ses lectures lui montre qu'il est en avance ou en retard sur l'autre microprocesseur. Les déroulements des programmes des deux microprocesseurs 100, 200 lors de leur synchronisation peuvent s'assimiler aux mouvements de deux mobiles parcourant une circonférence, l'un à vitesse constante, l'autre le poursuivant.

La chronologie des opérations en cours de recherche de synchronisme est définie par des nombres de cycles machine c'est-à-dire de cycles élémentaires d'opérations des microprocesseurs qui correspondent en durée aux microcycles de l'horloge mais qui n'ont pas de référence absolue par rapport à ces derniers mais par rapport au programme exécuté, toute instruction prenant pour son exécution un nombre défini de cycles machine.

L'un des microprocesseurs, par exemple le microprocesseur 100 est alors programmé pour que:

— il effectue successivement

. deux lectures successives du registre de synchronisation 205 du deuxième microprocesseur 200 espacées d'un nombre entier $N_1$ de cycles machine,

. un armement de son registre de synchronisation 105 (inscription d'un niveau logique 1) au bout d'un nombre entier $N_2$ de cycles machine comptés depuis sa première lecture du registre de synchronisation 205 du deuxième microprocesseur 200,

. un désarmement de son registre de synchronisation 105 (inscription d'un niveau logique 0) au bout d'un nombre entier $N_3 + 1$ de cycles ma-chine comptés depuis l'armement effectif de son registre de synchronisation 105,

— il répète l'ensemble des opérations précédentes au bout d'un nombre entier $N_4$ de cycles machine comptés depuis l'armement effectif de son registre de synchronisation 105 tant que le registre de synchronisation 205 du deuxième microprocesseur 200 ne lui est pas apparu constamment armé au cours des deux lectures qu'il en effectue

— et, une fois que le registre de synchronisation 205 du deuxième microprocesseur 200 lui est apparu constamment armé, début, au bout d'un nombre entier $N_5$ de cycles machine comptés depuis le désarmement de son registre de synchronisation 105, le programme de conduite de l'installation industrielle tandis que l'autre, le microprocesseur 200 dans l'exemple considéré est programmé pour que:

— il effectue successivement

. un armement de son registre de synchronisation 205 (inscription d'un niveau logique 1),

. un désarmement de son registre de synchronisation 205 (inscription d'un niveau logique 0) au bout du nombre entier $N_1 + 1$ de cycles machine comptés depuis l'armement effectif de son registre de synchronisation 205,

. deux lectures successives du registre de synchronisation 105 du premier microprocesseur 100 au bout d'un mobre entier $N_2$ de cycles machine comptés depuis l'armement effectif de son registre de synchronisation, les deux lectures successives étant espacées du nombre entier $N_3$ de cycles machine,

— il répète l'ensemble des opérations précédentes au bout d'un nombre entier $N_6$ de cycles machine, différent du nombre entier $N_4$, les cycles machine étant comptés à partir de la première lecture effectuée, tant que le registre de synchronisation 105 du premier microprocesseur 100 ne lui apparait pas constamment armé au cours des deux lectures successives qu'il en effectue.

— et, une fois que le registre de synchronisation 105 du premier microprocesseur 100 lui apparait constamment armé, débuté au bout d'un nombre entier $N_5 + 1$ de cycles machine comptés depuis sa deuxième lecture, le programme de conduite de l'installation industrielle.

Le nombre entier $N_6$ de cycles machine au bout duquel le deuxième microprocesseur 200 répète l'armement et le désarmement de son registre de synchronisation 205 et la double lecture du registre de synchronisation 105 du premier microprocesseur 100 est avantageusement pris égal:

— au nombre entier $N_4$ diminué d'une unité se le deuxième microprocesseur 200 a vu le registre de synchronisation 105 du premier microprocesseur 100 armé au cours de sa première lecture et désarmé au cours de sa deuxième lecture,

— au nombre entier $N_4$ augmenté d'une unité si le deuxième microprocesseur 200 a vu le registre de synchronisation 105 du deuxième microprocesseur 100 désarmé au cours de sa première lecture et armé au cours de sa deuxième lecture

— et à la somme des nombres enier $N_1$ et $N_4$ augmentée d'une unité si le deuxième microprocesseur 200 a vu le registre de synchronisation 105 du premier microprocesseur 100 constamment désarmé au cours de ses deux lectures.

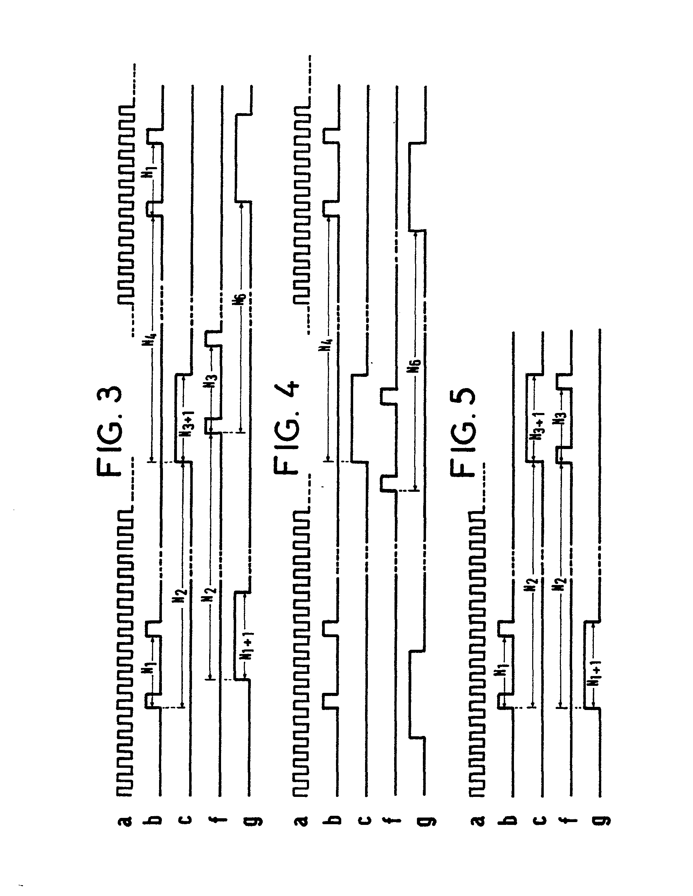

Cette dernière solution est représentée dans les figures 3, 4 et 5 qui sont des diagrammes de temps illustrant la chronologie des inscriptions et lectures des registres de synchronisation 105, 205 des microprocesseurs 100, 200 lors de la procédure de synchronisation. Dans ces figures les courbes a représentent le signal de l'horloge 300, les courbes b les instants de lecture par le premier microprocesseur 100 du registre de synchronisation 205 du deuxième microprocesseur 200, les courbes c les états logiques du registre de synchronisation 105 du premier microprocesseur 100, les courbes f les instants de lecture par le deuxième microprocesseur 200 du registre de synchronisation 105 du premier microprocesseur 100 et les courbes g les états logiques du registre de synchronisation 205 du deuxième microprocesseur 200. L'origine des temps est prise, arbitrairement, dans toutes ces figures par rapport au début des opérations de synchronisation effectuées par le premier microprocesseur. L'ensemble des nombres entiers $N_1$, $N_2$, $N_3$, $N_4$ et $N_6$ de cycles machine définissant la chronologie des opérations en cours de recherche du synchronisme ont été repris sur ces figures.

La figure 3 est relative au cas où le premier microprocesseur 100 est en avance de deux microcycles d'horlogue sur le deuxième microprocesseur 200. Le premier microprocesseur 100 commence par deux lectures successives du registre de synchronisation 205 du deuxième microprocesseur qui sont espacées d'un nombre $N_1$ de cycles machine et au cours desquelles il ne voit pas ce registre constamment armé. Il arme ensuite son registre de synchronisation 105, $N_2$ cycles machine après sa première lecture, pendant $N_3 + 1$ cycles machine et réitère ces opéra-tions $N_4$ cycles machine après le début de l'armement de son registre de synchronisation 105 car il n'a pas vu le registre de synchronisation 205 du deuxième microprocesseur 200 constamment armé. Le deuxième microprocesseur 200 commence par armer son registre de synchronisation 205 avec un retard de deux microcycles d'horloge par rapport à la première lecture faite par le premier microprocesseur et maintient ce registre 205 armé pendant $N_1 + 1$ cycles machine. Il entame ensuite, au bout de $N_2$ cycles machine après l'armement de son registre de synchronisation 205, deux lectures du registre de synchronisation 105 du premier microprocesseur espa-cées de $N_3$ cycles machine et voit ce registre une première fois armé et une seconde fois désarmé ce qui le conduit à réitérer ces opérations un nombre $N_6$ de cycles machine après sa première lecture pris égale au nombre ($N_4 - 1$ afin de diminuer son retard d'un microcycle d'horloge. Au bout de deux intérations les deux microprocesseurs se retrouvent en synchronisme, cas représenté à la figure 5.

La figure 4 est relative au cas où le premier microprocesseur 100 est en retard de deux microcycles d'horloge sur le deuxième microprocesseur 200. Le comportement du premier microprocesseur 100 reste inchangé par rapport à la figure 3. Celui du deuxième est modifié avant la première itération car il a vu au cours des deux premières lectures effectuées, le registre de synchronisation 105 une première fois désarmé et une deuxième fois armé ce qui le conduit à effectuer sa première itération un nombre $N_6$ de cycles machine après sa première lecture pris égal au nombre $N_4 + 1$ afin de diminuer son avance d'un microcycle d'horloge. Au bout de deux itérations les deux microprocesseurs se retrouvent en synchronisme, cas représenté à la figure 5.

La figure 5 montre que la chronologie définie par l'ensemble des nombres de cycles machines $N_1$, $N_2$, $N_3$ implique que lorsque l'un des microprocesseurs voit, au cours de sa double lecture, le registre de synchronisation de l'autre constamment armé, il en est nécessairement de même pour l'autre. Ces nombres de cycles machine sont obtenus en tenant compte des nombres de cycles machine nécessaires aux instructions d'armement, de désarmement et des lecture des registres de synchronisation ainsi qu'aux instructions nécessaires à l'interprétation des lectures des registres et, éventuellement, en programmant des instructions inopérantes dans le cadre des opérations effectuées en cours de recherche du synchronisme.

L'interpretation d'une double lecture d'un registre de synchronisation s'effectue en faisant calculer, par la microprocesseur concerné la somme de la deuxième lecture avec le double de la première lecture et l'analyse de cette somme, un résultat nul impliquant que le microprocesseur a vu le registre de synchronisation constamment désarmé, un résultat égal à un impliquant que le microprocesseur a vu le registre de synchronisation une première fois désarmé et une seconde fois armé, un résultat égal à deux impliquant que le microprocesseur a vu le registre de synchronisation une première fois armé et une seconde fois désarme et un résultat égal à trois impliquant que le microprocesseur a vu le registre de synchronisation constamment armé.

Pour davantage de sécurité, on peut procéder à un test de synchronisation consistant à commander, à chaque microprocesseur, après qu'il ait vu le registre de synchronisation de l'autre constamment armé au cours des deux lectures successives qu'il en effectue et avant qu'il ne débute le programme de conduite de l'installation industrielle, une troisième lecture du registre de synchronisation de l'autre microprocesseur au cours de laquelle ce dernier registre doit apparaître désarmé, un résultat inverse conduisant pour le microprocesseur concerné à une reprise du programme de synchronisation depuis l'origine. Cette troisième lecture constitue un test du bon fonctionnement des registres de synchronisation.

Comme on l'a vu précédemment, la désynchronisation de deux microprocesseurs 100, 200 peut se produire à la suite d'un désaccord sur l'interprétation d'une donnée binaire en cours de variation. Comme ce désaccord disparait dès que la donnée a fini de changer d'état il est avantageux, d'attendre la disparition de ce désaccord pour ne pas avoir à reprendre depuis son origine le programme de conduite de l'installation industrielle. Dans ce but on complète le procédé de synchronisation en imposant, à chaque microprocesseur 100, 200, au cours de l'exécution du programme de conduite de l'installation industrielle, de transférer à son interface de sortie sur des sorties spécifiques ne délivrant pas de commande mais testées par les comparateurs 101, 201, toutes les données en provenance de l'extérieur avant de les utiliser et de recommencer plusieurs fois cette opération tant que les comparateus 101, 201 détectent une différence avant d'entamer la procédure de synchronisation précédemment décrite. L'interface de positionnement 104, 204 de la mémoire de défaut 102, 202 de chaque microprocesseur 100, 200 est alors utilisé pour désarmer la mémoire de défaut 102, 202 entre chaque tentative. En dehors de ces tentatives l'interface de positionnement 104, 204 sert à des tests de bon fonctionnement de la mémoire de défaut 102, 202.

**Revendications**

1. Procédé de synchronisation de deux microprocesseurs (100, 200) ayant chacun son programme et fonctionnant à partir des microcycles d'une horloge commune (300) définissant la durée de leurs cycles machine caractérisé en ce qu'il consiste:

— à munir chaque microprocesseur (100, 200) d'un registre dit de synchronisation (105, 205) qu'il peut armer par l'inscription d'une première valeur er désarmer par l'inscription d'une deuxième valeur et qui peut être lu par l'autre microprocesseur (200, 100),

— à commander les microprocesseurs (100, 200) pour qu'ils entament simultanément une procédure de synchronisation au cours de laquelle l'un d'entre eux dit premier microprocesseur (100);

. effectue deux lectures successives du registre de synchronisation (205) de l'autre microprocesseur (200) dit deuxième microprocesseur, ces deux lectures étant espacées d'un nombre entier $N_1$ de microcycles comptés au moyen des cycles machine du premier microprocesseur (100),

. arme son registre de synchronisation (105) au bout d'un nombre entier $N_2$ de microcycles comptés au moyen de ses cycles machine à partir de sa première lecture du registre de synchronisation (205) du deuxième microprocesseur (200),

. désarme son registre de synchronisation (105) au bout d'un nombre entier $N_3 + 1$ de microcycles comptés au moyen de ses cycles machine depuis l'armement effectif de son registre de synchronisation (105),

. répète l'ensemble des trois opérations précédentes au bout d'un nombre entier $N_4$ de microcycles comptés au moyen de ses cycles machine depuis l'armement effectif de son registre de synchronisation (105), tant que le registre de synchronisation (205) du deuxième microprocesseur (200) ne réflète pas un état de synchronisation en lui apparaissant constamment armé au cours des deux lectures successives qu'il en effectue

. et, une fois que le registre de synchronisation (205) du deuxième microprocesseur (200) lui apparaît constamment armé, ce qui lui permet de repérer sa position dans la procédure de synchronisation par rapport à celle du deuxième microprocesseur (200), attend un nombre entier $N_5$ di

microcycles comptés au moyen de ses cycles machine depuis le désarmement de son registre de synchronisation (105), pour retrouver le synchronisme et reprendre son programme

tandis qu'au cours de cette même procédure de synchronisation l'autre microprocesseur dit deuxième microprocesseur (200)

. arme son registre de synchronisation (205),

. désarme son registre de synchronisation (205) au bout du monbre entier $N_1 + 1$ de microcycles comptés au moyen de ses cycles machine depuis l'armement de son registre de synchronisation (205),

. effectue deux lectures successives du registre de synchronisation (105) du premier microprocesseur (100) au bout du nombre entier $N_2$ de microcycles comptés au moyen de ses cycles machine depuis l'armement effectif de son registre de synchronisation (205), ces deux lectures étant espacées du nombre entier $N_3$ de microcycles comptés au moyen de ses cycles machine

. répète l'ensemble de ces trois opérations au bout d'un nombre $N_6$ de microcycles différent du nombre $N_4$, la valeur absolue de la différence $N_6 - N_4$ étant un nombre premier par rapport à $N + N_4$, les microcycles étant comptés au moyen de ses cycles machine à partir de sa première lecture, tant que le registre de synchronisation (105) du premier microprocesseur (100) ne réflète par un état de synchronisation en lui apparaissant constamment armé au cours des deux lectures successives qu'il effectue

. et une fois que le registre de synchronisation (105) du premier microprocesseur (100) lui est apparu constamment armé, ce qui lui permet de repérer sa position dans la procédure de synchronisation par rapport à celle du premier microprocesseur (100), attend un nombre entier $N_5 + 1$ de microcycles comptés au moyen de ses cycles machine depuis sa deuxième lecture pour retrouver le synchronisme et reprendre son programme.

2. Procédé selon la revendication 1, caractérisé en ce que le nombre $N_6$ de microcycles au bout duquel le deuxième microprocesseur (200) répète l'armement et le désarmement de son registre de synchronisation (205) ainsi que les deux lectures successives du registre de synchronisation (105) du premier microprocesseur (100) diffère d'un microcycle du nombre $N_4$ de microcycles au bout duquel le premier microprocesseur (100) répète des opérations analogues.

3. Procédé selon la revendication 1, caractérisé en ce que le nombre $N_6$ de microcycles au bout duquel le deuxième microprocesseur (200) répète l'armement et le désarmement de son registre de synchronisation (205) ainsi que les deux lectures successives du registre de synchronisation (205) du premier microprocesseur (100) est égal:

— au nombre $N_4$ diminué d'une unité si le deuxième microprocesseur (200) a vu le registre de synchronisation (105) du premier microprocesseur (100) armé au cours de sa première lecture et désarmé au cours de sa deuxième lecture,

— au nombre $N_4$ augmenté d'une unité si le

deuxiéme microprocesseur (200) a vu le registre de synchronisation (105) du premier microprocesseur (100) désarmé au cours de sa première lecture et armé au cours de sa deuxième lecture
— et à la somme des nombres $N_1$ et $N_4$ augmentée d'une unité si le deuxième microprocesseur (200) a vu le registre de synchronisation (105) du premier microprocesseur (100) constamment désarmé au cours de ses deux lectures.

4. Procédé selon la revendication 1, caractérisé en ce qu'il comporte en outre un test de synchronisation consistant à commander à chaque microprocesseur (100, 200), après qu'il ait vu le registre de synchronisation (205, 105) de l'autre (200, 100) constamment armé au cours des deux lectures successives qu'il en effectue et avant qu'il exécute son programme, une troisiéme lecture du registre de synchronisation (205, 105) de l'autre microprocesseur (200, 100) au cours de laquelle ce dernier registre (205, 105) doit apparaître désarmé, un résultat inverse conduisant, pour le microprocesseur concerné (100, 200) à une reprise du procédé de synchronisation depuis l'origine.

5. Procédé selon la revendication 1 appliqué à des microprocesseurs (100, 200) identiques devant effectuer en parallèle une même tâche à partir de données identiques disponibles sur des entrées communes et à l'aide de programmes distincts mais identiques, chacun des microprocesseurs (100, 200) étant munie d'un interface de sortie (OI) dans lequel il inscrit ses informations de sortie et d'un comparateur (101, 201) connecté en entrées aux interfaces de sortie (OI), ce procédé étant caractérisé en ce qu'il consiste en outre, pour maintenir le synchronisme, à commander parallèlement à chacun des microprocesseurs (100, 200) au cours de l'exécution de leurs programmes, de transférer toutes les données en provenance de l'extérieur dans les interfaces de sortie (OI) avant leur utilisation et à recommencer cette opération tant que les comparateurs (101, 201) détectent une différence entre les données délivrées par les interfaces de sortie (OI).

**Patentansprüche**

1. Verfahren zur Synchronisierung zweier Mikroprozessoren (100, 200), die je ein eigenes Programm besitzen und ausgehend von Mikrozyklen eines gemeinsamen Taktgebers (300) betrieben werden, der die Dauer ihrer Maschinenzyklen definiert, dadurch gekennzeichnet, daß
— jeder Mikroprozessor (100, 200) mit einem Synchronisationsregister (105, 205) versehen ist, das er durch Einschreiben eines ersten Werts aktivieren und durch Einschreiben eines zweiten Werts inaktivieren kann und das vom anderen Mikroprozessor (200, 100) abgefragt werden kann,
— die Mikroprozessoren (100, 200) so gesteuert werden, daß sie gleichzeitig eine Synchronisationsprozedur beginnen, während der einer der beiden Mikroprozessoren (100)
. zweimal nacheinander das Synchronisationsregister (25) des anderen Mikroprozessors (200), zweiter Mikroprozessor genannt, abfragt, und zwar mit einem zeitlichen Abstand entsprechend einer ganzen Zahl $N_1$ von Mikrozyklen, gerechnet anhand des Maschinenzyklen des ersten Mikroprozessors (100),
. sein Synchronisationsregister (105) nach einer ganzen Zahl $N_2$ von Mikrozyklen, gerechnet anhand seiner Maschinenzyklen ausgehend von der ersten Abfrage des Synchronisationsregisters (205) des zweiten Mikroprozessors (200) aktiviert,
. sein Synchronisationsregister (105) nach einer ganzen Zahl $N_3 + 1$ von Mikrozyklen, gerechnet anhand seiner Maschinenzyklen ausgehend von der tatsächlichen Aktivierung seines Synchronisationsregisters (105) inaktiviert,
. die Gesamtheit der drei genannten Operationen nach einer ganzen Zahl $N_4$ von Mikrozyklen wiederholt, gerechnet anhand seiner Maschinenzyklen ausgehend von der tatsächlichen Aktivierung seines Synchronisationsregisters (105), solange das Synchronisationsregister (205) des zweiten Mikroprozessors (200) nicht einen Synchronisationszustand aufzeigt, indem er ihm während der zwei von ihm durchgeführten aufeinanderfolgenden Abfragvorgänge dauernd aktiviert erscheint,
. und eine ganze Zahl $N_5$ von Mikrozyklen, gerechnet anhand seiner Maschinenzyklen ausgehend von der Inaktivierung seines Synchronisationsregisters (105) wartet, um den Synchronzustand widerzufinden und sein Programm wieder aufzunehmen, sobald das Synchronisationsregister (205) des zweiten Mikroprozessors (200) ihm dauernd aktiviert erscheint, so daß er seine Lage in der Synchronisationsprozedur bezüglich der des zweiten Mikroprozessors (200) feststellen kann,
wogegen der andere Mikroprozessor, genannte zweiter Mikroprozessor (200) während dieser selben Synchronisationsprozedur
. sein Synchronisationsregister (205) aktiviert,
. sein Synchronisationsregister (205) nach einer ganzen Zahl $N_1 + 1$ von Mikrozyklen, gerechnet anhand seiner Maschinenzyklen ausgehend von der Aktivierung seines Synchronisationsregisters (205) inaktiviert,
. zwei aufeinanderfolgende Abfragevorgänge des Synchronisationsregisters (105) des ersten Mikroprozessors (105) nach einer ganzen Zahl $N_2$ von Mikrozyklen durchführt, gerechnet anhand seiner Maschinenzyklen ausgehend von der tatsächlichen Aktivierung seines Synchronisationsregisters (205), wobei diese beiden Abfragevorgänge einen gegenseitigen Abstand entsprechend einer ganzen Zahl $N_3$ von Mikrozyklen aufweisen, gerechnet anhand seiner Maschinenzyklen,
. die Gesamtheit dieser drei Operationen nach einer Zahl $N_6$ von Mikrozyklen wiederholt, die sich von der Zahl $N_4$ unterscheidet, wobei der Absolutwert der Differenz $(N_6 - N_4$ eine Primzahl bezüglich $N_2 + N_4$ ist und die Mikrozyklen anhand seiner Maschinenzyklen ausgehend von dem ersten Abfragevorgang gezählt werden, solange das Synchronisationsregister (105) des ersten Mikroprozessors (100) nicht einen Synchronzustand wiedergibt, indem es während zweier aufeinanderfolgendere von ihm durchgeführter Abfragevorgänge dauernd aktiviert erscheint,

. und eine ganze Zahl $N_5 + 1$ von Mikrozyklen gerechnet anhand seiner Maschinenzyklen ausgehend vom zweiten Abfragevorgang abwartet, um den Synchronzustand wiederzufinden und sein Programm wieder aufzunehmen, sobald das Synchronisationsregister (105) des ersten Mikroprozessors (100) ihm dauernd aktiviert erscheint, so daß et seine Lage in der Synchronisationsprozedur bezügliche der des ersten Mikroprozessors (100) feststellen kann.

2. Verfahren nach Anspruch 1, dadurch gekennzeichnet, daß die Zahl $N_6$ von Mikrozyklen, nach denen der zweite Mikroprozessor (200) die Aktivierung und die Inaktivierung seines Synchronisationsregisters (205) sowie die beiden aufeinanderfolgenden Abfragevorgänge des Synchronisationsregisters (105) des ersten Mikroprozessors (100) wiederholt, um einen Mikrozyklus von der Zahl $N_4$ von Mikrozyklen abweicht, nach denen der erste Mikroprozessor (100) entsprechende Operationen wiederholt.

3. Verfahren nach Anspruch 1, dadurch gekennzeichnet, daß die Zahl $N_6$ von Mikrozyklen, nach denen der zweite Mikroprozessor (200) die Aktivierung und die Inaktivierung seines Synchronisationsregisters (205) sowie die beiden aufeinanderfolgenden Abfragevorgänge des Scynronisationsregisters (205) des ersten Mikroprozessors (100) wiederholt, gleich ist

— der Zahl $N_4 - 1$, wenn der zweite Mikroprozessor (200) das Synchronisationsregister (105) des ersten Mikroprozessors während seines ersten Abfragevorgangs aktiviert und während seines zweiten Abfragevorgangs inaktiviert vorfand,

— der Zahl $N_4 + 1$, wenn der zweite Mikroprozessor (200) das Synchronisationsregister (105) des ersten Mikroprozessors (100) während des ersten Abfragevorgangs inaktiviert und während des zweiten Abfragevorgangs aktiviert vorfand,

— und der Summe $N_1 + N_4 + 1$, wenn der zweite Mikroprozessor (200) das Synchronisationsregister (105) des ersten Miktoprozessors (100) während der beiden Abfragevorgänge dauernd inaktiviert vorfand.

4. Verfahren nach Ansprüch 1, dadurch gekennzeichnet, daß es außerdem einen Synchronisationstest umfaßt, der darin besteht, daß jeder Mikroprozessor (100, 200), nachdem er das Synchronisationsregister (205, 105) des anderen Mikroprozessors (200, 100) während der beiden aufeinanderfolgenden Abfragevorgänge, die er durchführt, und vor Ausführung seines Programms, dauernd aktiviert vorfand, zu einem dritten Abfragevorgang des Synchronisationsregisters (205, 105) des anderen Mikroprozessors (200, 100) veranlaßt wird, während dem dieses letztere Register (205, 105) inaktiviert, erscheinen muß, wogegen ein entgegengesetztes Ergebnis für den betreffenden Mikroprozessor (100, 200) zu einer Wiederaufnahme des Synchronisationsverfahrens von Anfang an führt.

5. Verfahren nach Anspruch 1 in Anwendung auf gleiche Mikroprozessoren (100, 200), die parallel die gleiche Aufgabe ausgehend von gleichen Daten lösen sollen, die an gemeinsamen Eingängen anliegen, und mithilfe eigener, aber identischer Programme, wobei jeder Mikroprozessor (100, 200) eine Ausgangsschnittstelle (OI), in die er seine Ausgangsinformationen einschreibt, und einen Komparator (101, 201) aufweist, der eingangsseitig an die Ausgangsschnittstellen (OI) angeschlossen ist, dadurch gekennzeichnet, daß außerdem zur Erhaltung des Synchrozustands während der Ausführung der Programme der Mikroprozessoren (100, 200) jeder Mikroprozessor veranlaßt wird, alle von außen kommenden Daten auf die Ausgangsschnittstellen (OI) vor deren Verwendung zu übertragen und diese Operation zu wiederholen, solange die Komparatoren (101, 201) eine Differenz zwischen den von den Ausgangsschnittstellen (OI) ausgegebenen Daten feststellen.

**Claims**

1. A method for synchronizing two microprocessors (100, 200) each one having its program and operating on the basis of microcycles of a common clock (300) defining the duration of their machine cycles, characterized in that it consists:

— in providing in each microprocessor (100, 200) a register called synchronisation register (105, 205) which can be activated by the inscription of a first value and inactivated by the inscription of a second value and the contents of which can be read by the other microprocessor (200, 100),

— in controlling the microprocessors (100, 200) in such a way that they engage a synchronisation procedure during which one of them called first microprocessor (100):

. performs two successive reading operations of the synchronisation register (205) of the other microprocessor (200), called second microprocessor, these two reading operations being spaced by an integer $N_1$ of microcycles counted by means of machine cycles of the first microprocessor (100),

. activates its synchronisation register (105) after an integer $N_2$ of microcycles counted by means of its machine cycles from its first reading operation of the synchronisation register (205) of the second microprocessor (200) onwards,

. inactivates its synchronisation register (105) after $N_3 + 1$ microcycles counted by means of its machine cycles from the effective activation of its synchronisation register (105) onwards,

. repeats these aforementioned three operations after an integer $N_4$ of microcycles counted by means of its machine cycles from the effective activation of its synchronisation register (105) onwards, as long as the synchronisation register (205) of the second microprocessor (200) does not show a synchronisation state by being constantly activated during the two successive reading operations which it performs,

. and, as soon as the synchronisation register (205) of the second microprocessor (200) appears to be constantly activated, which enables the first microprocessor to find its position in the synchronisation procedure with respect to that of the second microprocessor (200) awaits an integer $N_5$ of microcycles counted by means of its machine cycles from the inactivation of its synchronisation register (105) onwards, for regaining the synchronisation state and taking over its program, whereas during this very synchronisation procedure, the other microprocessor, called second microprocessor (200)

. activates its synchronisation register (205),

. inactivates its synchronisation register (205) after an integer $N_1 + 1$ of microcycles counted by means of its machine cycles from the activation of its synchronisation register (205) onwards,

. performs two successive reading operations of the synchronisation register (105) of the first microprocessor (100) after an integer $N_2$ of microcycles counted by means of its machine cycles from the effective activation of its synchronisation register (205), these two reading operations being spaced by an integer $N_3$ of microcycles counted by means of its machine cycles,

. repeats these three operations after a number of $N_6$ of microcycles which is different from the number $N_4$, the absolute value of the difference $N_6 - N_4$ being a prime number with respect to $N_2 + N_4$, the microcycles being counted by means of its machine cycles from its first reading operation onwards as long as the synchronisation register (105) of the first microprocessor (100) does not show a synchronisation state through being constantly activated during these two successive reading operations which it performs,

. and, as soon as the synchronisation register (105) of the first microprocessor (100) appears to it to be constantly activated, thus enabling the second microprocessor to find its position in the synchronisation procedure with respect to that of the first microprocessor (100), awaits an integer $N_5 + 1$ of microcycles counted by means of its machine cycles from the second reading operation onwards for regaining the synchronisation state and taking over its program.

2. A method according to claim 1, characterized in that the number $N_6$ of microcycles at the end of which the second microprocessor repeats the activation and the inactivation of its synchronisation register (205) as well as the two successive reading operations of the synchronisation register (105) of the first microprocessor (100) differs by one microcycle from the number $N_4$ of microcycles after which the first microprocessor (100) repeats analog operations.

3. A method according to claim 1, characterized in that the number $N_6$ of microcycles, after which the second microprocessor (200) repeats the activation and the inactivation of its synchronisation register (205) as well as the two successive reading operations of the synchronisation register (205) of the first microprocessor (100) is equal:

— to the number $N_4 - 1$, if the second microprocessor (200) has seen the synchronisation register (105) of the first microprocessor (100) activated during its first reading operation and inactivated during its second operation,

— to the number $N_4 + 1$, if the second microprocessor (200) has seen the synchronisation register (105) of the first microprocessor (200) inactivated during the first reading operation and activated during the second reading operation,

— and to the number $N_1 + N_4 + 1$, if the second microprocessor (200) has seen the synchronisation register (105) of the first microprocessor constantly inactivated during these two reading operations.

4. A method according to claim 1, characterized in that it further comprises a synchronisation test consisting in imposing on each microprocessor (100, 200) after having seen the synchronisation register (205, 105) of the respective other microprocessor (200, 100) constantly activated during the two successive reading operations which it performs and prior to the execution of its program, a third reading operation of the synchronisation register (205, 105) of the respective other microprocessor (200, 100) during which this latter register (205, 105) should appear inactivated, an inverse result making the concerned microprocessor (100, 200) start again the synchronisation procedure from its beginning.

5. A method according to claim 1, applied to identical microprocessors (100, 200) which should parallelly perform an identical task on the basis of identical data available at common inputs, and by means of distinct but identical programs, each one of the microprocessors (100, 200) being provided with an output interface (OI) into which it inscribes its output informations, and with a comparator (101, 201), the inputs of which are connected to the output interfaces (OI), this method being characterized in that it further consists, in view of maintaining the synchronisation state, in imposing parallelly on each one of the microprocessors (100, 200) during the execution of their programs, to transfer all data originating from the outside to the output interfaces (OI) prior to their treatment, and to begin this operation again as long as the comparators (101, 201) detect a difference between the data delivered by the output interfaces (OI).

FIG.1

# FIG. 2

FIG. 3

FIG. 4

FIG. 5